# EUROPÄISCHE PATENTSCHRIFT

(11) **EP 2 945 463 B1**
(45) Veröffentlichungstag und Bekanntmachung des Hinweises auf die Patenterteilung: **16.12.2020**
(21) Anmeldenummer: 14168709.5
(22) Anmeldetag: 16.05.2014
(51) Int. Cl.: H05B 6/12

(54) **Induktionskochfeld**
Induction cooking hob
Plaque de cuisson à induction

(43) Veröffentlichungstag der Anmeldung: 18.11.2015
(73) Patentinhaber: E.G.O. Elektro-Gerätebau GmbH, 75038 Oberderdingen (DE)
(72) Erfinder: Wein, Siegbert, 76703 Kraichtal (DE); Keller, Hartmut, 76356 Weingarten (DE)
(74) Vertreter: Patentanwälte Ruff, Wilhelm, Beier, Dauster & Partner mbB

(56) Entgegenhaltungen:
- EP-A1- 1 954 097
- EP-A1- 2 490 505
- WO-A1-2008/058614
- DE-A1-102012 101 829
- DE-A1-102013 220 286
- JP-A- 2004 335 295

## Beschreibung

### Anwendungsgebiet und Stand der Technik

Die Erfindung betrifft ein Induktionskochfeld mit mehreren Induktionsspulen und einer Kochfeldfläche über diesen Induktionsspulen.

Induktionskochfelder sind seit langem bekannt und setzen sich auf dem Markt immer mehr durch. Bei der Herstellung bzw. Montage von Induktionskochfeldern spielt unter anderem deren elektrischer Anschluss eine Rolle hinsichtlich Gestaltung einerseits und Anschlussaufwand andererseits. Aus der EP 1954097 A1 ist es bekannt, Anschlusskabel der Induktionsspulen durch eine Öffnung in einem flächigen Träger bzw. Tragblech, auf dem die Induktionsspulen angeordnet sind, nach unten zu führen zu darunter angeordneten Anschlussmitteln in Form von Anschlussklemmen oder Anschlusssteckern. Dies bedeutet aber einen erhöhten Anschlussaufwand sowie relativ lange Anschlussleitungen, die unter Umständen zu lang sind und dann stören können.

Die DE 102012101829 A1 beschreibt ein Induktionskochfeld mit Kontaktierungseinrichtungen von einer Leiterplatte mit einer Steuer- und Leistungselektronik darauf an darüber angeordnete Induktionsspulen. Dabei ragen die Kontaktierungseinrichtungen nach Art von aufrecht stehenden Stiften oder Hülsen durch ein Tragblech, auf dem die Induktionsspulen angeordnet sind. An die Kontaktierungseinrichtung werden Anschlussleitungen zu den Induktionsspulen angeschraubt. Pro Induktionsspule sind dabei zwei Anschlusskabel mit zwei Kontaktierungseinrichtungen vorgesehen.

Aus der der JP 2004-335295 A ist ein Induktionskocher bekannt mit einer Induktionsspule, die mittels säulenartigen Trägern über einer Leiterplatte angeordnet ist. Von der Leiterplatte gehen zwei Anschlusskabel auf etwa die Höhe der Induktionsspule und werden dann mit dieser elektrisch verbunden.

Aus der WO 2008/058614 A1 geht ein weiteres Induktionskochfeld hervor, das mehrere Induktionsspulen aufweist. Die Induktionsspulen sind dabei rechteckig ausgebildet.

### Aufgabe und Lösung

Der Erfindung liegt die Aufgabe zugrunde, ein eingangs genanntes Induktionskochfeld zu schaffen, mit denen Probleme des Stands der Technik gelöst werden können und es insbesondere möglich ist, die Induktionsspulen vereinfacht, schnell und montagefreundlich sowie montagesicher elektrisch anzuschließen.

Gelöst wird diese Aufgabe durch ein Induktionskochfeld mit den Merkmalen des Anspruchs 1. Vorteilhafte sowie bevorzugte Ausgestaltungen der Erfindung sind Gegenstand der weiteren Ansprüche und werden im Folgenden näher erläutert. Der Wortlaut der Ansprüche wird durch ausdrückliche Bezugnahme zum Inhalt der Beschreibung gemacht.

Das Induktionskochfeld weist mehrere Induktionsspulen, eine Kochfeldfläche bzw. Kochfeldplatte über diesen Induktionsspulen und einen flächigen Induktionsspulen-Träger bzw. ein Tragblech unter den Induktionsspulen auf. Die Induktionsspulen werden dabei von dem Träger bzw. Tragblech getragen bzw. sind darauf angeordnet, insbesondere auch befestigt. Unter dem flächigen Träger bzw. Tragblech sind weitere Funktionseinheiten des Induktionskochfelds vorgesehen, insbesondere elektrische bzw. elektronische. Dies können vorzugsweise eine Leistungselektronik, eine Steuerung und/oder Lüftermittel für das Induktionskochfeld bzw. die Induktionsspulen sein. Des Weiteren sind als ein elektrischer Anschluss elektrische Anschlussmittel für die Induktionsspulen an eine Leistungselektronik und/oder an eine Steuerung vorgesehen, vorteilhaft für beide. Besonders vorteilhaft sind die elektrischen Anschlussmittel für einen elektrischen Anschluss der Induktionsspulen an eine Leistungselektronik anders ausgestaltet als für einen elektrischen Anschluss an eine Steuerung.

Erfindungsgemäß ist vorgesehen, dass der elektrische Anschluss auf Höhe der Induktionsspulen erfolgt bzw. die Anschlussmittel auf Höhe der Induktionsspulen angeordnet sind oder, anders ausgedrückt, der elektrische Anschluss bzw. die Anschlussmittel oberhalb des Trägers oder des Tragblechs angeordnet sind und vorteilhaft den Träger oder das Tragblech überragen oder darauf angeordnet sein können. Des Weiteren ist der elektrische Anschluss zerstörungsfrei lösbar ausgebildet, beispielsweise als Verschraubung oder als Stecker, während Verbindungsmöglichkeiten wie Schweißen oder Löten entfallen, da sie nicht zerstörungsfrei gelöst werden können.

Dadurch ist es möglich, dass der elektrische Anschluss und somit auch zumindest ein Teil der Anschlussmittel oder die kompletten Anschlussmittel näher an den Induktionsspulen angeordnet sind als wenn sie auf einer tieferen Ebene darunter angeordnet wären. Dies gilt zumindest für den Teil der Anschlussmittel, die für den elektrischen Anschluss zuständig sind bzw. diesen bewirken. Somit sind die Anschlussmittel auch leichter zugänglich bzw. der elektrische Anschluss kann leicht von oben erfolgen, da der flächige Träger bzw. das Tragblech nicht im Weg ist. Insbesondere wenn vorteilhaft zumindest der elektrische Anschluss als Leistungs-Anschluss mit den elektrischen Leistungs-Anschlussmitteln für die Induktionsspulen an eine Leistungselektronik auf der Höhe der Induktionsspulen angeordnet ist oder nur knapp darunter, aber oberhalb des Trägers, kann nicht nur allgemein Leiterlänge eingespart werden, sondern auch noch die Länge von besonders dicken Leitern der Induktionsspulen, was auch eine signifikante Materialersparnis ergibt.

In Ausgestaltung der Erfindung kann der elektrische Anschluss bzw. können die Anschlussmittel seitlich neben den Induktionsspulen und mit geringem Abstand dazu angeordnet sein. Ein solcher Abstand kann von 0,5 bis 3 cm reichen, unter Umständen sogar bis 5 cm. Vorteilhaft liegt er jedoch unter 3 cm.

Von den Induktionsspulen abstehende Anschlussenden oder Anschlussleiter, die an den entsprechenden Anschlussmitteln angeschlossen bzw. befestigt werden sollen als elektrischer Anschluss, können maximal 5 cm freie Länge von der Induktionsspule weg aufweisen. Besonders vorteilhaft sind dies sogar nur maximal 3 cm, so dass tatsächlich nur sehr kurze Anschlussleiter notwendig sind. Vorteilhaft gilt dies nicht nur für einen an eine äußere oder die äußerste Windung der Induktionsspule gehenden Anschlussleiter, sondern auch für einen vom Innenbereich oder der innersten Windung der Induktionsspule abgehenden Anschlussleiter. Dieser soll dann eben auch nur die vorgenannte geringe freie Länge seitlich über die Induktionsspule überstehen.

Bei der Erfindung befinden sich die Anschlussmittel bzw. der elektrische Anschluss sowohl für eine Leistungselektronik als auch eine Steuerung auf der vorgenannten erfindungsgemäßen Höhe der Induktionsspulen. Somit gibt es Leistungs-Anschlussmittel als Leistungs-Anschluss für die Leistungselektronik und Signal-Anschlussmittel als Signal-Anschluss an eine Steuerung, die eben jeweils beide auf der Höhe der Induktionsspulen bzw. oberhalb des Trägers oder Tragblechs angeordnet sind. Besonders vorteilhaft gilt dies aber für die Leistungs-Anschlussmittel als Leistungs-Anschluss.

Bei der Erfindung sind die Leistungs-Anschlussmittel und/oder die Signal-Anschlussmittel bzw. allgemein die Anschlussmittel und somit der elektrische Anschluss zerstörungsfrei lösbar ausgebildet. Somit sollen also ein Verschweißen oder ein Verlöten ebenso wie Nieten odgl. ausdrücklich ausgeschlossen sein. Vorteilhaft sind die Anschlussmittel für den elektrischen Anschluss als Schraubanschlüsse oder als Schraubklemmen ausgebildet, so dass auf bekannte Art und Weise mit einer bestimmten Form versehene Enden der Anschlussmittel, insbesondere mit Schraubhülsen oder Klemmhülsen versehen, vorgesehen sind, die sich auch nicht von allein lösen können. Alternativ können Klemmverbindungen oder Steckverbindungen verwendet werden.

Bei der Erfindung ist ein Halter für die Anschlussmittel, insbesondere die Leistungs-Anschlussmittel und/oder Signal-Anschlussmittel, auf einem Bauteilträger unterhalb des Trägers bzw. Tragblechs vorgesehen. Der Bauteilträger verläuft besonders vorteilhaft auch parallel dazu und ist flächig bzw. großflächig, insbesondere ähnlich groß wie der flächige Träger oder das Tragblech. Dieser Bauteilträger kann zumindest einen Teil der Leistungselektronik, einen Lüfter und/oder die vorgenannte Steuerung tragen. Der Halter ist an dem Bauteilträger befestigt bzw. angeordnet und steht von diesem ab und geht somit nach oben, um durch eine entsprechende Ausnehmung in dem Träger bzw. Tragblech zu ragen bis auf die erfindungsgemäße Höhe der Induktionsspulen. Somit muss der Halter für die Anschlussmittel bzw. den elektrischen Anschluss nicht an dem Träger bzw. Tragblech selbst originär befestigt werden, sondern kann beispielsweise durch diesen hindurchragen und darunter befestigt sein. Des Weiteren kann so auch schon ein weiterer elektrischer Anschluss am Halter an den Bauteilträger oder Leistungselektronik oder Steuerung auf dem Bauteilträger vorgesehen sein, wobei dieser Anschluss vorteilhaft bei Montage des Halters auf dem Bauteilträger hergestellt wird.

Es kann vorgesehen sein, dass ein elektrischer Leiter zur Leistungsübertragung von einem Leistungs-Anschlussmittel auf Höhe der Induktionsspulen, also oben am Halter, zu dem Bauteilträger darunter frei verläuft. Dabei kann dieser elektrische Leiter als breiter und flacher Leiter ausgebildet sein, beispielsweise als sogenannter Bandleiter oder Flachleiter. Auf dem Bauteilträger kann er mit einer Leiterbahn odgl. elektrisch kontaktiert sein, und zwar entweder festgelötet, auf einem Leiterbahnfeld festgeschraubt oder beides. Ein ausreichend großer und sicherer Abstand der Leiter einer Induktionsspule zueinander sowie zu anderen metallischen bzw. leitfähigen Teilen ermöglicht diese freiliegende Anordnung.

Bei der Erfindung weist der Halter für die Anschlussmittel zwei seitliche Halterfüße auf und einen zwischen diesen verlaufenden Querträger. Die Halterfüße sind dann am vorgenannten Bauteilträger befestigt und überragen den Träger bzw. das Tragblech möglicherweise sogar. Zwischen sich tragen die beiden Halterfüße den Querträger, insbesondere als einstückige Ausgestaltung, wobei die genannten Anschlussmittel bzw. elektrischen Anschlüsse an diesem Querträger befestigt bzw. angeordnet sind. Ein solcher Halter kann in etwa umgekehrt U-artig ausgebildet sein, alternativ umgekehrt T-förmig.

In Ausgestaltung der Erfindung können elektrische Signalleiter der Signal-Anschlussmittel an die Steuerung aus einem eigenstabilen Material bestehen, vorzugsweise aus Metalldraht mit einer Stärke von 0,3 mm bis 1 mm oder sogar 2 mm. Es können mehrere elektrische Signalleiter vorgesehen sein und weniger als 5 mm Abstand zueinander aufweisen. Des Weiteren verlaufen sie parallel bzw. sind parallel zueinander ausgebildet, und zwar verlaufen sie von dem Bauteilträger nach oben, durchstoßen dabei die Ebene des Trägers bzw. Tragblechs und stehen über diese etwas über bzw. enden auf Höhe der Induktionsspulen, insbesondere für einen Signal-Anschluss auf ähnlicher Höhe wie die vorgenannten Leistungs-Anschlussmittel. Durch die eigenstabile Ausgestaltung können sie direkt als eine Art Stecker ausgebildet werden, auf die ein passender Gegenstecker von der Induktionsspule oder von Sensoren wie Temperatursensoren oder von Anzeigemitteln direkt aufgesteckt werden kann. Es kann vorgesehen sein, dass die Signalleiter von einem Basisabschnitt auf dem Bauteilträger abstehen bzw. von diesem gehalten sind. Dieser Basisabschnitt kann eine Art Kunststoffmanschette sein, in welche die Signalleiter eingegossen oder eingespritzt sind zur leichteren Handhabung sowie zur Erhöhung ihrer Festigkeit.

In Erweiterung der Erfindung kann vorgesehen sein, dass die Signalleiter an dem vorgenannten Querträger des Halters befestigt sind. Dabei können sie beispielsweise durch den Querträger verlaufen und mit mindestens 3 mm Länge über den Querträger überstehen, was ihre elektrische Kontaktierung erleichtert. Des Weiteren können sie positionsfest an dem Querträger befestigt sein, beispielsweise durch eine auch alle Signalleiter umfassende Manschette odgl., die am Querträger befestigt wird bzw. gegenüber diesem nicht mehr verschoben werden kann.

Die Induktionsspulen weisen vorteilhaft eine im Wesentlichen rechteckige Form auf, insbesondere mit abgerundeten Ecken. Jeweils zwei Induktionsspulen sind dabei mit gleich langen Seiten nahe zueinander angeordnet, wobei ein Abstand zwischen 0,5 cm und 3 cm liegen kann. Die Leistungs-Anschlussmittel für die Induktionsspulen sind an den jeweils gegenüberliegenden Seiten dieser Zweier-Anordnungen angeordnet. Dies sind zwei Seiten, mit denen die Induktionsspulen voneinander weg weisen.

In Ausgestaltung der Erfindung können mehrere solcher vorgenannter Paare von gleichen Induktionsspulen nebeneinander auf dem Träger bzw. auf dem Trägerblech vorgesehen sein. Vorteilhaft sind dies zwei oder drei Paare. Sämtliche Leistungs-Anschlussmittel für die Induktionsspulen sind jeweils an der von der gegenüberliegenden bzw. benachbarten Induktionsspule weg weisenden Seite angeordnet. Somit liegen also die Anschlussmittel und auch die elektrischen Anschlüsse der Induktionsspulen immer außen von einer von den Induktionsspulen gebildeten gesamten Kochfläche. Vorteilhaft ist dabei pro Induktionsspule ein eigenes Anschlussmittel bzw. ein eigener elektrischer Leistungs-Anschluss vorgesehen, insbesondere ein Leistungs-Anschlussmittel.

### Kurzbeschreibung der Zeichnungen

Ein Ausführungsbeispiel der Erfindung ist in den Zeichnungen schematisch dargestellt und wird im Folgenden näher erläutert. In den Zeichnungen zeigen:
- Fig. 1: eine Schrägansicht eines Unterbaus eines Induktionskochfelds mit vier Induktionsspulen auf einem Tragblech samt Anschlussmitteln,
- Fig. 2: einen vergrößerten Ausschnitt der Darstellung aus Fig. 1,
- Fig. 3: eine Seitenansicht eines fertigen Induktionskochfelds mit dem Unterbau gemäß Fig. 1 unter einer Kochfeldplatte,
- Fig. 4: eine Vergrößerung der elektrischen Anschlussmittel für die Induktionsspulen in einer Ansicht entsprechend Fig. 1 und
- Fig. 5: eine Unteransicht der elektrischen Anschlussmittel aus Fig. 4.

### Detaillierte Beschreibung der Ausführungsbeispiele

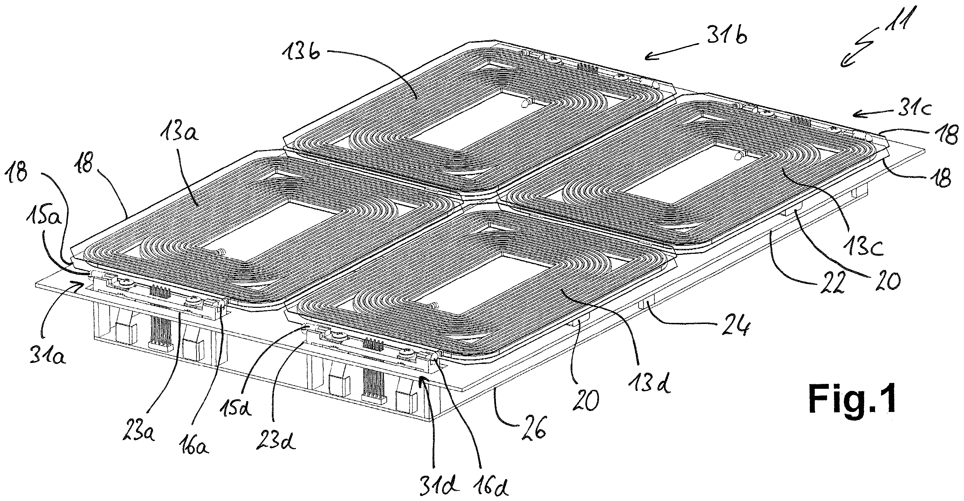

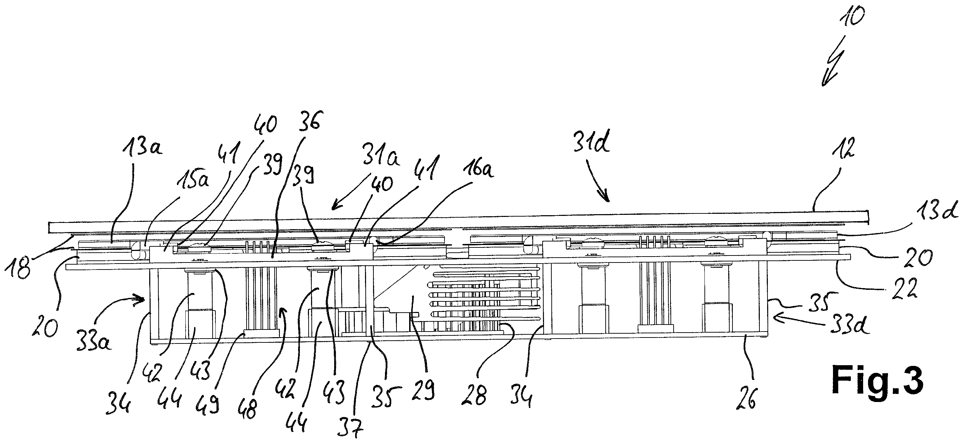

In der Fig. 1 ist in Schrägansicht von oben ein Unterbau 11 für ein erfindungsgemäßes Induktionskochfeld zu sehen, wie es in der Fig. 3 in Seitenansicht komplett dargestellt ist. Der Unterbau 11 weist vier Induktionsspulen 13a bis 13d auf, die aus einem üblichen Spulendraht 14 in mehreren Windungen gewickelt sind. Die Induktionsspulen 13a bis 13d sind einschichtig gewickelt und weisen im Wesentlichen eine rechteckige Außenform mit abgerundeten Ecken auf, was aber nicht zwingend so sein muss. Jede Induktionsspule weist ein inneres Anschlussende 15a bis 15d auf, welches von der innersten Windung aus abgeht und etwas über den äußeren Rand der Induktionsspule übersteht. Ebenso weist sie ein äußeres Anschlussende 16a bis 16d auf, welches direkt von der äußersten Windung abgeht und somit sehr kurz sein kann um über den äußeren Rand der Induktionsspule überzustehen. Auf diese Anschlussenden 15a bis 15d und 16a bis 16d bzw. deren elektrischen Anschluss wird nachfolgend noch näher eingegangen.

Die Induktionsspulen 13a bis 13d sind zwischen oberen Isolatorscheiben 18 und unteren Isolatorscheiben 18, beispielsweise aus Glimmer oder elektrisch isolierendem und/oder thermisch dämmendem Material, angeordnet, wie dies aus dem Stand der Technik bekannt ist. An der Unterseite der unteren Isolatorscheiben 18 sind Ferrite 20 in länglicher bzw. Stabform vorgesehen, wie dies ebenfalls aus dem Stand der Technik bekannt ist. Das innere Anschlussende 15 ist jeweils mit dem Spulendraht 14 von der innersten Spulenwindung abgehend durch die untere Isolatorscheibe 18 geführt und dann zwischen den Ferriten 20 hindurch außerhalb von der jeweiligen Induktionsspule zu einem entsprechenden elektrischen Anschlussmittel 31.

Die Induktionsspulen 13a bis 13d ruhen also mit ihrem Aufbau auf einem Tragblech 22, welches vorteilhaft großflächig ausgebildet ist und im Wesentlichen die Fläche bzw. Größe des Unterbaus 11 und auch des Induktionskochfelds 10 einnimmt. Anstelle eines Tragblechs 22 aus Metall kann auch ein Kunststoffteil verwendet werden. Das Tragblech weist vier Ausnehmungen 23a bis 23d auf, die jeweils im Bereich der Anschlussenden 15a bis 15d und 16a bis 16d vorgesehen sind.

Mittels Abstandshaltern 24 ist, wie insbesondere aus der seitlichen Darstellung der Fig. 3 entnommen werden kann, von unten an dem Tragblech 22 ein Bauteilträger 26 befestigt. Der Bauteilträger 26 kann eine Leiterplatte sein bzw. direkt aufgebrachte Leiterbahnen aufweisen. Alternativ kann es eine Art Träger aus Kunststoff oder anderem isolierten Material sein, auf dem gemäß Fig. 3 zahlreiche Funktionseinheiten des Induktionskochfelds 10 angeordnet sind wie ein Lüfter 28 und eine Leistungselektronik 29 mit einem charakteristischen Kühlkörper. Vor allem kann hier auch eine nicht dargestellte elektronische Steuerung als sozusagen Intelligenz für das Induktionskochfeld 10 vorgesehen sein. Mittels Leiterbahnen auf dem Bauteilträger 26 sind sie elektrisch verbunden bzw. kontaktiert. Das Induktionskochfeld 10 weist als Kochfeldfläche eine übliche Kochfeldplatte 10 auf, vorteilhaft aus Glaskeramik.

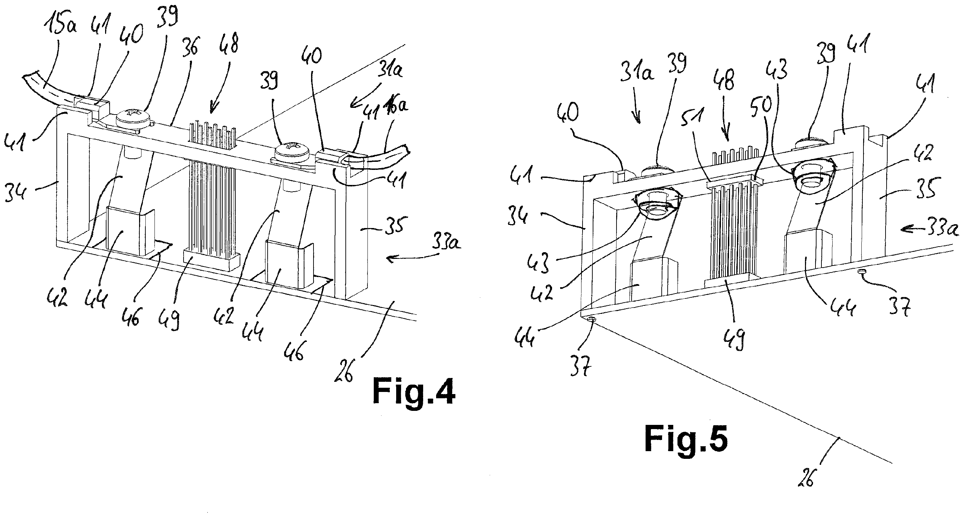

Für die Induktionsspulen 13a bis 13d sind elektrische Anschlussmittel 31a bis 31d als elektrische Anschlüsse vorgesehen. Für jedes Anschlussmittel 31 bzw. elektrischen Anschluss ist ein aus den Fig. 4 und 5 besser erkennbarer Halter 33a bis 33d vorgesehen, der jeweils zwei seitliche Halterfüße 34 und 35 aufweist, die einen Querträger 36 tragen. Der Halter 33 ist somit in etwa umgekehrt U-förmig, vorteilhaft besteht er aus isolierendem und stabilem Kunststoff. Unten an den Haltefüßen 34 und 35 sind gemäß Fig. 5 Haltezapfen 37 vorgesehen, die in entsprechenden kleinen Löchern im Bauteilträger 26 befestigt werden können. Anstelle der Haltezapfen 37 können die Haltefüße 35 auch von unten durch den Bauteilträger 26 hindurch verschraubt sein. Ebenso können die Haltezapfen 37 für eine Rastwirkung nach Einstecken ausgebildet sein.

Die Halter 33a bis 33d sind auf dem Bauteilträger 26 befestigt und verlaufen durch die vorgenannten Ausnehmungen 23a bis 23d im Tragblech 22 hindurch, so dass sie als Anschlussmöglichkeit bzw. elektrischer Anschluss oberhalb des Tragblechs 22 bzw. etwa auf Höhe der Induktionsspulen 13a bis 13d liegen.

Die Anschlussmittel 31a bis 31d bzw. die elektrischen Anschlüsse sind sämtlich identisch ausgebildet. An dem Querträger 36 sind Schrauben 39 vorgesehen, die in einem Gewinde im Querträger 36 verlaufen und an denen die Anschlussenden 15a und 16a jeweils mit Kabelschuhen 40 auf bekannte Art und Weise angeschraubt sind. Somit findet der elektrische Anschluss im Sinne der vorliegenden Erfindung etwa auf Höhe der Induktionsspulen 13 statt, da der absolute Höhenversatz zwischen den Induktionsspulen 13 und den in Fig. 3 erkennbaren Schrauben 39 bzw. Kabelschuhen 40 sehr gering ist und nur wenige Millimeter beträgt. Auf alle Fälle findet der elektrische Anschluss aber über dem Tragblech 22 statt und bildet so einen leicht herzustellenden und vor allem wieder zerstörungsfrei lösbaren Anschluss, beispielsweise für Reparaturzwecke. Alternativ zu den Schrauben 39 könnten auch entsprechend stabile und sichere Steckkontakte oder Klemmkontakte auf etwa dieser Höhe vorgesehen sein. Die Kabelschuhe 40 sind vorteilhaft zwischen Flanken 41 am Querträger 36, die über diesen etwas nach oben stehen, fixiert und vor allem gegen ein Verdrehen beim Ein- und Ausschrauben der Schrauben 39 gesichert.

Die Schrauben 39 drücken gegen die Kabelschuhe 40, wobei die oberen Enden von Bandleitern 42, die an der Unterseite des Querträgers 36 durch Umbiegen anliegen, Gewindemuttern 43 aufweisen, in die die Schrauben 39 eingreifen für eine mechanische Befestigung und eine elektrische Kontaktierung. Am unteren Ende weisen die Bandleiter 42 jeweils einen Basisabschnitt 44 auf, mit dem sie an entsprechenden Kontaktfeldern 46 auf dem Bauteilträger 26 verbunden sind, vorteilhaft verlötet sind. Alternativ können die Bandleiter 42 auch umgebogen sein und auf der Oberseite des Querträgers 36 aufliegen, wobei die Kabelschuhe 40 darauf liegen, so dass die Schrauben 39 die Kabelschuhe 40 direkt gegen die Bandleiter 42 drücken.

Die elektrische Kontaktierung mittels der Schrauben 39, der Kabelschuhe 40 und der Gewindemuttern 43 an die Induktionsspulen bzw. deren Leiter bildet die eingangs genannten Leistungs-Anschlussmittel, die eben etwa auf Höhe der Induktionsspulen liegen, unter Umständen auch leicht darunter. Für Signal-Anschlüsse, beispielsweise von Anzeigen und/oder Temperatursensoren odgl., können Signal-Anschlussmittel vorgesehen sein in Form der Signalleiter 48, die in einen Basisabschnitt 49 eingegossen sind, der auf dem Bauteilträger 26 aufliegt. Unten können die Signalleiter 48 ein Stück aus dem Basisabschnitt 49 herausstehen und an entsprechende, hier nicht dargestellte Kontaktfelder mit Leiterbahnen auf dem Bauteilträger 26 angeschlossen sein, vorteilhaft verlötet sein. Die Signalleiter 48 verlaufen dabei parallel zueinander von dem Bauteilträger 26 aus senkrecht nach oben. Im oberen Bereich weisen sie, wie Fig. 5 zeigt, einen Verbindungsabschnitt 50 auf, der sie noch einmal auf exaktem Abstand hält. Des Weiteren kann dieser Verbindungsabschnitt 50 in einen Signalleiterausschnitt 51 im Querträger 36 eingesetzt sein zur örtlich exakten Fixierung der Signalleiter 48.

Die über den Querträger 36 überstehenden oberen Enden der Signalleiter 48 bilden erkennbar einen Anschlussstecker, auf den ein Gegenstecker der vorgenannten Teile wie Temperatursensor odgl. leicht aufgesteckt werden kann. Der Signal-Anschluss ist hier also auch als zerstörungsfrei lösbarer elektrischer Anschluss ausgebildet, nämlich als Steckanschluss. Zur Fixierung der Steckverbindung kann ein Gegenstecker Rasthaken odgl. aufweisen, die den Querträger 36 übergreifen können zur sicheren Kontaktierung.

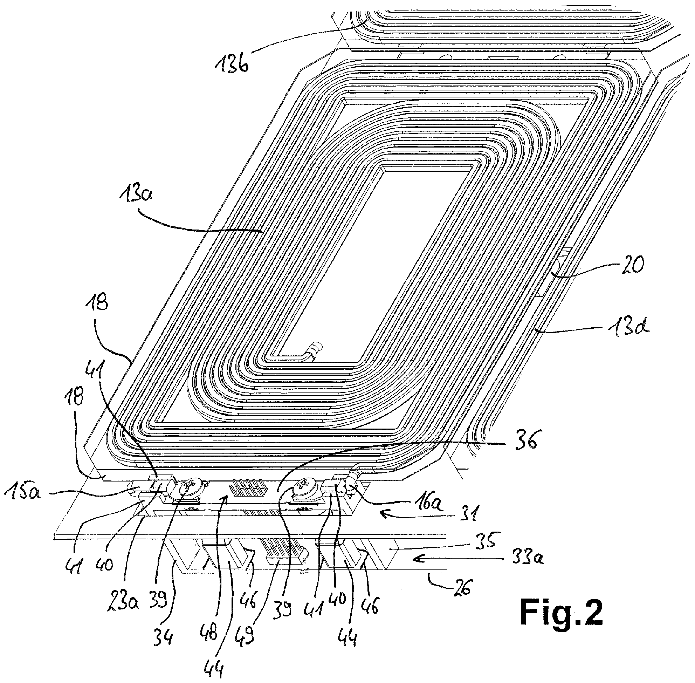

Aus der vergrößerten Darstellung der Fig. 2 ist zu ersehen, dass die Ausnehmungen 23a bis 23d für die Anschlussmittel 31a bis 31d deutlich größer sind, was ein einfacheres Aufsetzen sowie größere Maßtoleranzen ermöglicht. Alternativ können die Anschlussmittel 31a bis 31d bzw. die Halterfüße 34 und 35 samt Querträger 36 durch nur minimal größere Ausnehmungen ragen, so dass sie dadurch gegen seitliches Verkippen gesichert sind.

## Patentansprüche

1. Induktionskochfeld (10) mit
- mehreren Induktionsspulen (13a-d),
- einer Kochfeldfläche (12) über den Induktionsspulen,
- einem flächigen Träger (22) für die Induktionsspulen unter den Induktionsspulen, wobei unter dem Träger weitere Funktionseinheiten wie Leistungselektronik (29), Steuerung oder Lüftermittel (28) für das Induktionskochfeld und die Induktionsspulen vorgesehen sind,
- einem elektrischen Anschluss mit Anschlussmitteln (31a-d) für die Induktionsspulen an eine Leistungselektronik (29) und/oder Steuerung,
wobei der elektrische Anschluss zerstörungsfrei lösbar ausgebildet ist,
wobei der elektrische Anschluss bzw. die Anschlussmittel (31a-d) auf Höhe der Induktionsspulen (13a-d) angeordnet sind bzw. oberhalb des Trägers (22) angeordnet sind, wobei sowohl die Leistungs-Anschlussmittel (39-44) als Leistungs-Anschluss für eine Leistungselektronik (29) für die Induktionsspulen (13a-d) als auch Signal-Anschlussmittel (48-51) als Signal-Anschluss an eine Steuerung als elektrischer Anschluss jeweils auf der Höhe der Induktionsspulen (13a-d) vorgesehen sind,
**dadurch gekennzeichnet, dass**
- ein Bauteilträger (26) unterhalb des Trägers (22) und parallel dazu vorgesehen ist,
- ein Halter (33) für die Leistungs-Anschlussmittel (39-44) und/oder die Signal-Anschlussmittel (48-51) auf dem Bauteilträger (26) befestigt ist,
- der Halter (33) für die Leistungs-Anschlussmittel (39-44) und/oder die Signal-Anschlussmittel (48-51) zwei seitliche Halterfüße (34, 35) aufweist und einen zwischen diesen verlaufenden Querträger (36), wobei die Anschlussmittel (31a-d) an dem Querträger (36) befestigt sind.

2. Induktionskochfeld nach Anspruch 1, **dadurch gekennzeichnet, dass** der elektrische Anschluss bzw. die Anschlussmittel (31a-d) seitlich neben den Induktionsspulen (13a-d) und mit 0,5 cm bis 5 cm Abstand dazu angeordnet sind.

3. Induktionskochfeld nach Anspruch 1 oder 2, **dadurch gekennzeichnet, dass** von den Induktionsspulen (13a-d) abstehende Anschlussenden (15, 16) zur Befestigung an den Leistungs-Anschlussmitteln (39-44) maximal 5 cm freie Länge von der Induktionsspule (13a-d) weg aufweisen, vorzugsweise maximal 3 cm.

4. Induktionskochfeld nach einem der vorhergehenden Ansprüche, **dadurch gekennzeichnet, dass** der elektrische Anschluss als Leistungs-Anschlussmittel (39-44) und/oder als Signal-Anschlussmittel (48-51) verschraubt ist, wobei vorzugsweise die Leistungs-Anschlussmittel und/oder die Signal-Anschlussmittel als Schraubanschlüsse oder als Schraubklemmen ausgebildet sind.

5. Induktionskochfeld nach einem der vorhergehenden Ansprüche, **dadurch gekennzeichnet, dass** der Bauteilträger (26) zumindest einen Teil der Leistungselektronik (29) und/oder die Steuerung trägt, wobei vorzugsweise der Halter (33) an dem Bauteilträger (26) befestigt ist, von dem Bauteilträger absteht und nach oben geht und durch eine entsprechende Ausnehmung (23) in dem Träger (22) ragt.

6. Induktionskochfeld nach Anspruch 5, **dadurch gekennzeichnet, dass** ein elektrischer Leiter (42) zur Leistungsübertragung von dem Leistungs-Anschlussmittel (39-44) auf Höhe der Induktionsspulen (13a-d) zu dem Bauteilträger (26) darunter frei verläuft, vorzugsweise als breiter flacher Leiter (42), wobei er insbesondere auf dem Bauteilträger (26) mit einer Leiterbahn (46) elektrisch kontaktiert ist.

7. Induktionskochfeld nach einem der vorhergehenden Ansprüche, **dadurch gekennzeichnet, dass** elektrische Signalleiter (48) der Signal-Anschlussmittel (48-51) an die Steuerung aus einem eigenstabilen Material bestehen und mit weniger als 5mm Abstand und parallel zueinander von einem Basisabschnitt (49) auf dem Bauteilträger (26) abstehen und geradlinig mit demselben Abstand nach oben gehen bis auf die Höhe der Induktionsspulen (13a-d).

8. Induktionskochfeld nach Anspruch 7, **dadurch gekennzeichnet, dass** die Signalleiter (48) an dem Querträger (36) befestigt sind, wobei vorzugsweise die Signalleiter (48) durch den Querträger (36) verlaufen und insbesondere mit mindestens 3mm Länge über den Querträger nach oben überstehen.

9. Induktionskochfeld nach einem der vorhergehenden Ansprüche, **gekennzeichnet durch** mehrere Induktionsspulen (13a-d), die eine im Wesentlichen rechteckige Form aufweisen, wobei jeweils zwei Induktionsspulen mit gleich langen Seiten mit einem Abstand von 0,5 cm bis 3 cm zueinander angeordnet sind, und wobei die Leistungs-Anschlussmittel (39-44) für die Induktionsspulen (13a-d) an den jeweils gegenüberliegenden Seiten, mit denen die Induktionsspulen voneinander weg weisen, angeordnet sind.

10. Induktionskochfeld nach Anspruch 9, **dadurch gekennzeichnet, dass** mehrere Paare von gleichen Induktionsspulen (13a-d) auf dem Träger vorgesehen sind nebeneinander, vorzugsweise zwei oder drei Paare, wobei sämtliche Leistungs-Anschlussmittel (39-44) für die Induktionsspulen jeweils an den von der gegenüberliegenden bzw. benachbarten Induktionsspule weg weisenden Seiten angeordnet sind.

## Claims

1. Induction cooktop (10), comprising
- a plurality of induction coils (13a-d),
- a cooktop surface (12) above the induction coils,
- a planar support (22) for the induction coils under the induction coils, wherein further functional units like power electronics (29), control or ventilation means (28) for the induction cooktop and the induction coils are provided under the support,
- an electrical connection with connection means (31a-d) for the induction coils to power electronics (29) and/or control,
wherein the electrical connection is designed for disconnection in a nondestructive manner,
wherein the electrical connection and the connection means (31a-d), respectively, are disposed on the level of the induction coils (13a-d), and are disposed above the support (22), respectively,
wherein both the power connection means (39-44) as power connection for power electronics (29) for the induction coils (13a-d) and signal connection means (48-51) as signal connection to a control as electrical connection are provided respectively on the level of the induction coils (13a-d),
**characterized in that**
- a component carrier (26) is provided underneath the support (22) and in parallel to the latter,
- a holder (33) for the power connection means (39-44) and/or the signal connection means (48-51) is fastened on the component carrier (26),
- the holder (33) for the power connection means (39-44) and/or the signal connection means (48-51) has two lateral holder feet (34, 35) and a cross member (36) extending between said feet, wherein the connection means (31a-d) are fastened to the cross member (36).

2. Induction cooktop according to claim 1, **characterized in that** the electrical connection and the connection means (31a-d) are disposed laterally next to the induction coils (13a-d) and at a distance of 0.5 cm to 5 cm thereto.

3. Induction cooktop according to claim 1 or 2, **characterized in that** connection ends (15, 16) projecting from the induction coils (13a-d) for fastening to the power connection means (39-44) have a free length away from the induction coils (13a-d) of a maximum of 5 cm, preferably a maximum of 3 cm.

4. Induction cooktop according to any one of the preceding claims, **characterized in that** the electrical connection is screwed as a power connection means (39-44) and/or as a signal connection means (48-51), wherein preferably the power connection means and/or the signal connection means are configured in the form of screwed connections or in the form of screw terminals.

5. Induction cooktop according to any one of the preceding claims, **characterized in that** the component carrier (26) carries at least a part of the power electronics (29) and/or the control, wherein preferably the holder (33) is fastened to the component carrier (26), projects from the component carrier and extends upward and protrudes through a corresponding recess (23) in the support (22).

6. Induction cooktop according to claim 5, **characterized in that** an electrical conductor (42) for power transfer from the power connection means (39-44) on the level of the induction coils (13a-d) to the component carrier (26) extends freely below, preferably as a wide flat conductor (42), wherein the conductor in particular on the component carrier (26) has electrical contact to a conducting path (46).

7. Induction cooktop according to any one of the preceding claims, **characterized in that** electrical signal conductors (48) of the signal connection means (48-51) to the control are composed of an inherently stable material and project from a base section (49) on the component carrier (26) with a distance of less than 5mm and parallel to each other and extend in a straight line upward with the same distance up to the level of the induction coils (13a-d).

8. Induction cooktop according to claim 7, **characterized in that** the signal conductors (48) are fastened to the cross member (36), wherein preferably the signal conductors (48) pass through the cross member (36), and in particular project upward beyond the cross member with a length of at least 3mm.

9. Induction cooktop according to any one of the preceding claims, **characterized by** a plurality of induction coils (13a-d) which have an essentially rectangular shape, wherein in each case two induction coils with sides of equal length are disposed at a distance of 0.5 cm to 3 cm to each other, and wherein the power connection means (39-44) for the induction coils (13a-d) are disposed on the respective opposite sides, with which the induction coils face away from each other.

10. Induction cooktop according to claim 9, **characterized in that** multiple pairs of identical induction coils (13a-d) are provided on the support in juxtaposition, preferably two or three pairs, wherein all of the power connection means (39-44) for the induction coils are respectively disposed on the sides facing away from the opposite or adjacent induction coil.

## Revendications

1. Plaque de cuisson à induction (10), comprenant
- plusieurs bobines d'induction (13a-d),
- une surface de plaque de cuisson (12) au-dessus des bobines d'induction,
- un élément porteur (22) plat pour les bobines d'induction sous les bobines d'induction, des unités fonctionnelles supplémentaires, comme une électronique de puissance (29), une commande ou des moyens de ventilation (28) pour la plaque de cuisson à induction et les bobines d'induction se trouvant sous l'élément porteur,
- un branchement électrique comprenant des moyens de raccordement (31a-d) pour les bobines d'induction à une électronique de puissance (29) et/ou une commande, le branchement électrique étant configuré amovible de manière non destructive,
le branchement électrique ou les moyens de raccordement (31a-d) étant disposés à hauteur des bobines d'induction (13a-d) ou au-dessus de l'élément porteur (22),
les moyens de raccordement de puissance (39-44), sous la forme d'un branchement de puissance pour une électronique de puissance (29) pour les bobines d'induction (13a-d), ainsi que des moyens de raccordement de signal (48-51) sous la forme d'un branchement de signal à une commande étant présents sous la forme d'un branchement électrique respectivement à hauteur des bobines d'induction (13a-d), **caractérisée en ce que**
- un porte-composant (26) est présent au-dessous de l'élément porteur (22) et parallèlement à celui-ci,
- un élément de maintien (33) pour les moyens de raccordement de puissance (39-44) et/ou les moyens de raccordement de signal (48-51) est fixé sur le porte-composant (26),
- l'élément de maintien (33) pour les moyens de raccordement de puissance (39-44) et/ou les moyens de raccordement de signal (48-51) possède deux pieds de maintien (34, 35) latéraux et un élément porteur transversal (36) qui suit un tracé entre ceux-ci, les moyens de raccordement (31a-d) étant fixés à l'élément porteur transversal (36).

2. Plaque de cuisson à induction selon la revendication 1, **caractérisée en ce que** le branchement électrique ou les moyens de raccordement (31a-d) sont disposés latéralement à côté des bobines d'induction (13a-d) et à 0,5 cm à 5 cm de distance de celles-ci.

3. Plaque de cuisson à induction selon la revendication 1 ou 2, **caractérisée en ce que** les extrémités de branchement (15, 16) qui dépassent des bobines d'induction (13a-d) destinées à la fixation aux moyens de raccordement de puissance (39-44) possèdent une longueur libre maximale de 5 cm, de préférence maximale de 3 cm, à l'écart des bobines d'induction (13a-d).

4. Plaque de cuisson à induction selon l'une des revendications précédentes, **caractérisée en ce que** le branchement électrique en tant que moyens de raccordement de puissance (39-44) et/ou de moyens de raccordement de signal (48-51) est vissé, les moyens de raccordement de puissance et/ou les moyens de raccordement de signal étant de préférence réalisés sous la forme de branchements à visser ou de bornes à visser.

5. Plaque de cuisson à induction selon l'une des revendications précédentes, **caractérisée en ce que** le porte-composant (26) porte au moins une partie de l'électronique de puissance (29) et/ou de la commande, l'élément porteur (33) étant de préférence fixé au porte-composant (26), dépassant du porte-composant et s'étendant vers le haut, et faisant saillie à travers une cavité (23) correspondante dans l'élément porteur (22).

6. Plaque de cuisson à induction selon la revendication 5, **caractérisée en ce qu'**un conducteur électrique (42) destiné à la transmission de puissance depuis les moyens de raccordement de puissance (39-44) s'étend librement à hauteur des bobines d'induction (13a-d) vers le porte-composant (26) qui se trouve au-dessous, de préférence sous la forme d'un conducteur plat large (42), celui-ci étant notamment mis en contact électrique avec une piste conductrice (46) sur le porte-composant (26).

7. Plaque de cuisson à induction selon l'une des revendications précédentes, **caractérisée en ce que** les conducteurs de signal (48) électriques des moyens de raccordement de signal (48-51) à la commande se composent d'un matériau autostable et dépassent à moins de 5 mm d'écart et parallèlement les uns des autres d'une portion de base (49) sur le porte-composant (26), et se poursuivent en ligne droite avec le même écart vers le haut jusqu'à la hauteur des bobines d'induction (13a-d).

8. Plaque de cuisson à induction selon la revendication 7, **caractérisée en ce que** les conducteurs de signal (48) sont fixés sur l'élément porteur transversal (36), les conducteurs de signal (48) s'étendant de préférence à travers l'élément porteur transversal (36) et faisant notamment saillie avec une longueur minimale de 3 mm au-dessus de l'élément porteur transversal.

9. Plaque de cuisson à induction selon l'une des revendications précédentes, **caractérisée par** plusieurs bobines d'induction (13a-d), qui présentent une forme sensiblement rectangulaire, deux bobines d'induction ayant des côtés longs égaux étant respectivement disposées à un écart de 0,5 cm à 3 cm l'une de l'autre, et les moyens de raccordement de puissance (39-44) pour les bobines d'induction (13a-d) étant disposés au niveau des côtés respectivement opposés avec lesquels les bobines d'induction s'éloignent les unes des autres.

10. Plaque de cuisson à induction selon la revendication 9, **caractérisée en ce que** plusieurs paires des bobines d'induction (13a-d) identiques sont présentes les unes à côté des autres sur l'élément porteur, de préférence deux ou trois paires, tous les moyens de raccordement de puissance (39-44) pour les bobines d'induction étant respectivement disposés sur les côtés s'éloignant des bobines d'induction opposées ou voisines.
